# EUROPÄISCHE PATENTSCHRIFT

(11) **EP 4 313 471 B1**
(45) Veröffentlichungstag und Bekanntmachung des Hinweises auf die Patenterteilung: **28.05.2025**
(21) Anmeldenummer: 22717756.5
(22) Anmeldetag: 22.03.2022
(51) Int. Cl.: B23K 26/12, B23K 26/14, B23K 26/21

(54) **VORRICHTUNG UND VERFAHREN ZUM SCHWEISSEN UNTER VAKUUM, MIT EINER VERENGUNG ZUR ERZEUGUNG EINES VENTURIEFFEKTS**
DEVICE AND METHOD FOR WELDING IN A VACUUM, WITH A CONSTRICTION FOR PRODUCING A VENTURI EFFECT
DISPOSITIF ET PROCÉDÉ DE SOUDAGE SOUS VIDE, AVEC UNE CONSTRICTION AFIN DE CRÉER UN EFFET VENTURI

(30) Priorität: 24.03.2021 DE 102021107422
(43) Veröffentlichungstag der Anmeldung: 07.02.2024
(73) Patentinhaber: Mogema BV, 8084 GS Het Harde (NL)
(72) Erfinder: HOOGENBERG, Bas-Jan, 8043BP Zwolle (NL); FIKS, Arno, 8042NX Zwolle (NL); VEHOF, Robert, 7425EJ Deventer (NL); BRADY, Brian, 3824BA Amersfoort (NL)
(74) Vertreter: WSL Patentanwälte Partnerschaft mbB
(86) Internationale Anmeldenummer: PCT/EP2022/057517
(87) Internationale Veröffentlichungsnummer: WO 2022/200367

(56) Entgegenhaltungen:
- EP-A1- 2 130 636
- DE-A1- 102019 200 189
- US-A- 4 924 060

## Beschreibung

Die Erfindung betrifft eine Vorrichtung und ein Verfahren zum Schweißen unter Vakuum, siehe Ansprüche 1 und 14.

Das Schweißen von Metallen kann auf die unterschiedlichsten Weisen erfolgen. Bekannt sind Verfahren bei denen die zum Aufschmelzen der Grundwerkstoffe notwendige Energie über einen Lichtbogen, einen Elektronenstrahl oder einen Laser eingebracht werden. Hierdurch ergibt sich ein schmelzflüssiges Schweißbad, welches dazu führt, dass die Grundwerkstoffe nach dem Erstarren durch die Schweißnaht verbunden sind. Je nach Breite eines Schweißspaltes wird gegebenenfalls ein Füllmaterial in Form eines Drahtes oder Pulver zugefügt, damit genügend Material für die Verbindung vorhanden ist.

Es ist ferner bekannt, Schweißungen unter Schutzgas durchzuführen, um eine Oxidation bzw. Verzunderung des die Schweißnaht ausbildenden Materials zu verhindern. Insbesondere beim Verschweißen von leicht oxidierbaren Metallen, wie Leichtmetallen und insbesondere Aluminium bietet es sich an unter Schutzgas zu schweißen.

Darüber hinaus ist es ebenfalls zur Vermeidung von Oxidation bekannt, unter Vakuum zu schweißen. Das Elektronenstrahl-Vakuum-Schweißen ist hierbei schon sehr lange, nämlich seit 1949 bekannt. Nachdem in den 1960er Jahren Laser entwickelt wurden und deren Leistung kontinuierlich gesteigert werden konnte, ist auch das Laserschweißen unter Vakuum realisiert worden.

Aus der DE 10 2014 103635 ist es bekannt, die Linse einer Laseroptik in einer Vakuumlaserschweißanordnung zu schützen.

Aus der DE 10 2014 210838 A1 ist ebenfalls ein Schutz für die Laseroptik bei einem Verfahren bekannt, bei dem in einer Vakuumkammer geschweißt wird.

Aus der EP 3 412 401 A1 sind Gasströme zum Schützen der Laseroptik bekannt.

Aus der US 5.756.962 ist eine Gasdüse zum Schutz der Optik bei einem Laserschweißverfahren bekannt.

Aus der US 3.609.287 ist das Schweißen mit Elektronenstrahl bekannt, wobei ein lokales Vakuum aufgebracht werden soll.

Aus 3.719.791 A ist ein Vakuumkopf bekannt.

Aus der DE 11 2013 004 531 T5 ist ein Vakuumkopf für ein Schweißverfahren bekannt, der eine Dichtung mit unterschiedlichen Elastizitäten aufweisen soll. Hierdurch soll es möglich sein, auch bei einer vergleichbar unebene Schweißraupe die notwendige Abdichtung zu erzielen, in dem im Bereich der Schweißraupe ein elastischerer Dichtabschnitt verwendet wird, der sich besser anpassen kann. Zur Verbesserung der Anpassung soll der weichere Dichtungsabschnitt in eine Aussparung ausweichen können, während der übrige Teil der Dichtung an das Werkstück gepresst wird. Hierbei ist aber von Nachteil, dass eine solche Dichtung durch die heiße Schweißraupe zu schnell in Mitleidenschaft gezogen wird und zudem die Dichtung in ihrer Gesamtheit die Vorwärtsbewegung des Vakuumkopfes stark behindert.

Aus der EP 2 130 636 A1 (offenbarend dem Oberbegriff des Anspruchs 1) ist ein Schweißverfahren mit Elektronenstrahl bekannt, bei dem ein lokales Vakuum aufgebracht werden soll.

Aufgabe der Erfindung ist es eine Vorrichtung zu schaffen, mit der zuverlässig und wartungsärmer eine Verschweißung herbeigeführt werden kann.

Die Aufgabe wird mit den Merkmalen des Anspruch 1 gelöst.

Vorteilhafte Weiterbildungen sind in den abhängigen Ansprüchen angegeben.

Es ist eine weitere Aufgabe ist es, ein Laserschweißverfahren zu schaffen mit dem Aluminium und insbesondere Aluminiumblöcke unter Vakuum zuverlässig geschweißt werden.

Die Aufgabe wird mit den Merkmalen des Anspruch 14 gelöst.

Vorteilhafte Weiterbildungen sind in den abhängigen Ansprüchen angegeben.

Erfindungsgemäß wird eine Schweißvorrichtung mit einem Schweißkopf ausgebildet, der eine Schweißabdeckung umfasst. Die Schweißabdeckung ist glocken- oder haubenartig ausgebildet mit einer unteren Öffnung und einer diese umgebenden Abdeckungsrand.

Im Bereich des Randes ist dort, wo eine Schweißnaht sich befinden würde eine Aussparung vorgesehen, so dass die Abdeckung nicht auf der Schweißnaht aufsitzt.

Um eine Dichtung zu erzielen, ist die Abdeckung im Bereich der Aussparung tunnelartig nach außen verlängert. Im Tunnel ist zumindest ein Bürstenpaket vorhanden, es können auch mehrere Bürstenpakete nacheinander zum Einsatz kommen. Zusätzlich oder alternativ zu den Bürstenpaketen können Dichtlippen vorzugsweise aus dünnem Metall oder aus wärmebeständigem Kunststoff, z.B. PTFE vorhanden sein. Die Dichtlippen können auch lamellenartig aufeinander folgend ausgebildet sein. Auch können sich Bürstenpakete und Dichtlippen oder Dichtlamellenpakete alternierend aufeinander folgend angeordnet sein.

Erfindungsgemäß wird, um die Vorrichtung kompakt zu halten, der Unterdruck unter der Schweißabdeckung dadurch erzeugt, dass in der Wandung der Haube zumindest eine Venturidüse derart erzeugt wird, dass durch eine Bohrung in der Wandung ein Gasstrom geführt wird, der an zumindest einer Stelle über eine Verengung geführt wird. In diesem Bereich ist eine zweite Bohrung quer zur ersten Bohrung angeordnet, welche vom Inneren der Abdeckung zur Venturidüse reicht, so dass unter Nutzung des Venturieffekts Gas aus dem hohlen Bereich unter der Abdeckung gesaugt wird. Die Wandung der Haube kann mehrere solcher Anordnungen am Umfang verteilt besitzen. Ferner kann eine Bohrung mehrere Venturistufen aufweisen.

In einer vorteilhaften Weiterbildung wird zumindest eine Bohrung bis in oder sogar über den Bereich des Tunnels geführt, wobei im Bereich des Tunnels zumindest eine Venturistufe derart vorhanden ist, dass auch Gas aus dem Bereich des Tunnels und insbesondere nachströmendes Gas abgesaugt wird. Hierzu ist zumindest eine Querbohrung vom Tunnelinneren zu einer Venturistufe geführt. Es können auch mehrere Bohrungen vorhanden sein und dementsprechend mehrere Venturistufen. Die Querbohrungen sind z.B. so angeordnet, dass sie immer in einen kammerartigen Hohlraum zwischen zwei Bürsten oder Bürstenpaketen bzw. Dichtlippen oder Lamellenpakete reichen.

Es hat sich herausgestellt, dass das Vakuum, welches notwendig ist niedriger ist als zunächst angenommen, so dass eine extreme Abdichtung wie im Stand der Technik nicht notwendig ist, es reicht vielmehr einen geringeren Unterdruck, diesen dafür aber gleichmäßig aufrecht zu erhalten.

Die Erfindungsgemäße Vorrichtung und das erfindungsgemäße Verfahren dienen insbesondere dazu dickwandige Blöcke aus Aluminium zu schweißen und insbesondere dickwandige Kammern, welche aus mehreren Wandungsteilen zusammengesetzt sind.

Erfindungsgemäß wird hierbei die Kammer aus den Wandungs- sowie Boden und Deckenteilen zusammengesetzt und anschließend werden die gewünschten Teile verschweißt, wobei die Kammer hierbei nach der Ausrichtung der Teile unter Unterdruck gesetzt wird. Dies hat zwei Vorteile, einerseits werden die Teile aneinander fixiert, andererseits kann durch den Schweißstoß kein Gas aus dem Innenraum in die Schweißnaht oder die Schweißabdeckung gesaugt werden, was einerseits die Schweißnahtgüte verbessert und andererseits dafür sorgt, dass sich der Unterdruck unter der Abdeckung besser aufrecht erhalten lässt.

Die Abdeckung liegt mit dem die untere Öffnung begrenzenden Rand auf dem Werkstück auf, wobei der Rand eine gleitfähige Beschichtung oder eine entsprechenden Aufsatz aufweisen kann, z.B. aus PTFE oder Polyamid (Nylon).

Die Erfindung betrifft somit eine Vorrichtung zum Schweißen unter Vakuum, aufweisend eine glocken-oder haubenartige Schweißabdeckung mit einer umlaufenden Seitenwandung und einem von dieser begrenzten Hohlraum, wobei eine umlaufende freie Kante vorhanden ist, mit der die Schweißabdeckung auf einer ebenen Fläche aufsetzbar ist, so dass der Hohlraum (8) von der ebenen Fläche und der umlaufenden Wandung und ggf. einer Deckenwandung abgeschlossen wird, wobei in der umlaufenden Seitenwandung zumindest eine Anordnung mit einer Bohrung vorhanden ist mit einem Anschlussbereich für eine Fluidzuführung und einem Fluidauslass, wobei in der Bohrung eine Verengung zur Erzeugung eines Venturieffekts vorhanden ist und zudem eine Querbohrung von dem Hohlraum in die Bohrung vorhanden ist um über den Venturieffekt durch die Querbohrung aus dem Hohlraum Gas zur Erzeugung eines Unterdrucks anzusaugen.

Eine Weiterbildung sieht vor, dass eine Mehrzahl von Anordnungen mit der Bohrung in der umlaufenden Seitenwandung vorgesehen sind.

Eine Weiterbildung sieht vor, dass die Mehrzahl von Anordnungen über einen Ringkanal mit Fluid gespeist wird und der Ringkanal über einen oder mehrere Fluidzuführbereiche verfügt.

Eine Weiterbildung sieht vor, dass die Fluidauslässe der zumindest einen Anordnung in einen zweiten Ringkanal mündet, in dem das Fluid gesammelt über einen oder mehrere Auslässe abgeführt wird.

Eine Weiterbildung sieht vor, dass im Bereich einer geplanten Schweißnaht, die umlaufende Seitenwandung mit einem Vorsprung nach außen verlängert ausgebildet ist, wobei im Bereich eines Schweißstoßes ein Durchtrittstunnel für eine Schweißnaht vorgesehen ist.

Eine Weiterbildung sieht vor, dass der Durchtrittstunnel eine Breite besitzt, die so breit ist, dass eine üblicherweise mit dem Laser erzeugte Schweißnaht hier durchtreten kann.

Eine Weiterbildung sieht vor, dass oberhalb des Durchtrittstunnels eine Bohrung verläuft, wobei die Bohrung oberhalb des Durchtrittstunnels parallel zum Durchtrittstunnel nach außen verläuft, so dass der Durchtrittstunnel mit dem durch die Bohrung strömenden Fluid kühlbar ist.

Eine Weiterbildung sieht vor, dass innerhalb des Durchtrittstunnels ein oder mehrere Bürstenpaketen, insbesondere metallischen Bürstenpaketen vorgesehen sind, welche die umlaufende Seitenwandung verlängernd, mit der umlaufenden Kante vorzugsweise abschließen, so dass diese auf einer Schweißnaht aufliegen und von dieser ausgelenkt werden und bei einer Bewegung der Schweißabdeckung auf der Schweißnaht entlanggeführt werden.

Eine Weiterbildung sieht vor, dass zusätzlich oder anstelle von Bürstenpaketen Lamellen oder Dichtlippen aus einem wärmebeständigen Material, insbesondere einer Metallfolie oder einem dünnen Metallblech oder einem wärmebeständigen Kunststoff, wie PTFE, vorhanden sind, wobei Bürstenpakete und Lamellen oder Dichtlippen alternierend oder aufeinanderfolgend angeordnet sind.

Eine Weiterbildung sieht vor, dass im Bereich einer Tunneldecke des Durchtrittstunnels eine oder mehrere Querbohrungen in die Bohrung mündend vorgesehen sind mit jeweils einer zusammenwirkenden Venturi-Verengungen, um durch den Durchtrittstunnel von außen zum Hohlraum hin strömende Gase abzusaugen und gleichzeitig diesen Bereich intensiv zu kühlen.

Eine Weiterbildung sieht vor, dass zum Schweißen in der unmittelbaren Nähe von Kanten zu verschweißender Werkstücke eine automatisierte Abdeckeinrichtung vorhanden ist, die an einer oder an beiden Seiten der Schweißabdeckung angeordnet ist, wobei die Abdeckeinrichtung einen automatisch betätigbaren Verlängerungsblock besitzt und welcher, wenn die Schweißabdeckung die Kante erreicht, an die entsprechende Kante herangeschwenkt wird und dort gehalten wird, während die Schweißabdeckung über diesen Verlängerungsblock hinweggleitet, wobei der Verlängerungsblock in dem Moment, wo unter ihm kein Werkstück sich mehr befindet, automatisch mittels einer Führungsstruktur oder einer Führungskulisse nach unten ausgeschwenkt wird, wobei beispielsweise zwei Steuerkurven die Bewegung steuern und ein Betätigungselement, beispielsweise ein pneumatischer oder hydraulischer Zylinder, den Verlängerungsblock betätigt, wobei die Steuerkurven , das Betätigungselement und der Verlängerungsblock an einer Tragstruktur angeordnet sind, welche wiederum an der Vorrichtung angeordnet ist.

Eine Weiterbildung sieht vor, dass im Bereich der umlaufenden Seitenwandung von der umlaufenden kante her unten Schlitze angeordnet sind welche sich von der umlaufenden Kante in die umlaufende Wandung hineinerstrecken, wobei die Schlitze oder der Schlitz beispielsweise einen halbkreisförmigen Bogen beschreibt, so dass die in Bewegungsrichtung vordere Hälfte der umlaufenden Kante mit einem Schlitz versehen ist, wobei in dem Schlitz ein insbesondere durch Aufblasen ausfahrbares und haftendes Kissen oder eine Dichtung gelagert ist, welches sich an die Seitenwandung der Werkstücke anlegt und dort haftet, während die Schweißabdeckung mit der umlaufenden Seitenwandung bzw. der umlaufenden Kante über die Kante hinausbewegt wird.

Eine Weiterbildung sieht vor, dass die Schweißabdeckung kastenartig ausgebildet ist oder innerhalb einer kastenartigen Anordnung angeordnet ist, wobei die kastenartige Anordnung unterseitig eine Durchtrittsöffnung für den Laserstrahl besitzt, welche von der umlaufenden Kante begrenzt wird, wobei die kastenartige Anordnung eine ebene Bodenwandung besitzt, wobei in der ebenen Bodenwandung in Bewegungsrichtung voreilend eine verschiebliche Platte mit der Bodenwandung abschließend angeordnet ist, welche, wenn die Öffnung, die von der umlaufenden Kante begrenzt wird, in den Bereich der Kante kommt, mit der entsprechenden Kante abschließend über die Öffnung bewegbar ist, so dass sichergestellt ist, dass kein Vakuumleck entsteht, wobei auf der gegenüberliegenden Seite der Öffnung eine Durchtrittsnut vorgesehen ist, die sich in der Bodenwandung befindet, so dass eine entsprechende Schweißnaht hierin geführt werden kann. In der Durchtrittsnut ist ebenfalls ein plattenartiges Element geführt, welches in der Lage ist, in die von der umlaufenden Kante begrenzte Öffnung hineinzuragen, um eine Vakuumdichtigkeit im Bereich der Kante, wenn das Schweißverfahren begonnen wird, sicherzustellen. Die verschiebliche Platte und das plattenartige Element werden nur im Bereich der Kante verschoben und befinden sich ansonsten außerhalb der umlaufenden Kante, um vor der Schweißhitze geschützt zu sein.

In einem weiteren Aspekt betrifft die Erfindung ein Verfahren zum Schweißen unter Vakuum mittels Laser, wobei eine Vorrichtung nach einem der vorhergehenden Ansprüche längs einen Schweißstosses zwischen einem ersten Werkstück und einem zweiten Werkstück geführt wird und im Bereich des Schweißstosses ein Laserstrahl die Werkstücke aufschmilzt und derart miteinander verbindet.

Eine Weiterbildung sieht vor, dass die Bohrungen der Vorrichtung mit einem Gas oder einer Flüssigkeit durchströmt werden.

Eine Weiterbildung sieht vor, dass die zugeführte Flüssigkeit am Fluidauslass aufgenommen und insbesondere abgeführt wird.

Eine Weiterbildung sieht vor, dass zum Verschweißen von Hohlkörpern, insbesondere aus Aluminium, während des Schweißvorganges der Hohlkörper evakuiert wird bis zu einem gewünschten Unterdruck, so dass der Schweißstoß im Bereich der Schweißabdeckung den Unterdruck unterstützt oder kein Gas aus dem Innenraum des Hohlkörpers durch den Unterdruck in der Schweißabdeckung in diese hineingezogen werden.

Eine Weiterbildung sieht vor, dass eine bewegliche Unterdruckkammer unterhalb der Schweißabdeckung auf der anderen Seite des Schweißstoßes mitgeführt, um zu verhindern, dass durch den Schweißstoß Gas in den Hohlraum geführt wird und um eine verbesserte Schweißnahtqualität zu gewährleisten.

Eine Weiterbildung sieht vor, dass an einer gemeinsamen Kante der Werkstücke welche zum Verschweißen von der Vorrichtung überfahren werden muss zur Sicherung des Vakuums ein Blockelement formschlüssig und mit der Kante abschließend angeordnet wird, so dass die Schweißabdeckung über die Kante hinaus allseitig mit der umlaufenden Kante formschlüssig aufliegt, so dass das Vakuum gehalten werden kann.

Eine Weiterbildung sieht vor, dass das Blockelement an der Kante mit entsprechenden Spannelementen angeordnet wird und/oder seitlich vom Schweißstoß beispielsweise

Schwalbenschwanzführungen eingefräst oder in anderer Weise angeordnet werden und das Blockelement mit entsprechenden Schwalbenschwänzen auszubilden, so dass das Blockelement fest, formschlüssig und abschließend an der Kante angeordnet ist.

Eine Weiterbildung sieht vor, dass nachdem die Schweißnaht vervollständigt ist das Vakuum durch Abstellen der Strömung ebenfalls aufgelöst und die Schweißabdeckung abgenommen wird und anschließend das Blockelement umgesetzt wird, indem es aus den Schwalbenschwanzführungen herausgenommen wird und in entsprechende Schwalbenschwanzführungen der anderen Seite der Kante eingesteckt wird und dann der Schweißvorgang dadurch begonnen wird, dass die Schweißabdeckung entsprechend wieder aufgesetzt wird, das Vakuum gezogen wird und gegebenenfalls die Schweißabdeckung ebenfalls mit einem geringen Abstand von der Kante mit der Bewegung und damit der Laser mit der Schweißung beginnt.

Eine Weiterbildung sieht vor, dass die Abstände der Schwalbenschwanzführungen gleich angeordnet werden, so dass das Blockelement vorzugsweise an einer Seite Schwalbenschwänze besitzt, die dem einen Abstand der Schwalbenschwanzführungen an einer Seite der Kante entsprechen, wobei die andere Seite der Kante Schwalbenschwänze in einem anderen Abstand besitzt, so dass die Schwalbenschwanzführungen der Kanten nicht auf gleicher Höhe sitzen.

Eine Weiterbildung sieht vor, dass die Schwalbenschwanzführungen einen gleichen Abstand aufweisen, aber um einen gewissen Betrag versetzt an den jeweiligen Seiten der Kante angeordnet werden, wobei dann das Blockelement so groß gewählt ist, dass selbst bei einem solchen Versatz die Schweißabdeckung zuverlässig von unten mit dem Blockelement abgedeckt wird.

Eine Weiterbildung sieht vor, dass die Schwalbenschwanzführungen in den Werkstücken nach abgeschlossener Verschweißung mit Passstücken verschlossen werden.

Die Erfindung wird anhand einer Zeichnung beispielhaft erläutert. Es zeigen dabei:
- Figur 1:: stark schematisiert eine Ausführungsform der Vorrichtung;
- Figur 2:: die Vorrichtung nach Figur 1 stark schematisiert in einem Eckbereich eines Werkstücks;
- Figur 3:: eine mögliche Ausführungsform eines schwenkbaren Anbaus für eine Eckverschweißung an der erfindungsgemäßen Vorrichtung;
- Figur 4:: eine Ausführungsform für eine Eckverschweißung mit einer beweglichen aufblasbaren Dichtung;
- Figur 5:: stark schematisiert die Vorrichtung in einer perspektivischen Ansicht von unten mit verschieblichen Blenden;
- Figur 6:: schematisiert die Vorrichtung in einem Querschnitt, zeigend einen Durchlasstunnel für eine Schweißnaht;
- Figur 7:: die Vorrichtung nach Figur 6 in einem Längsschnitt von der Seite gesehen;
- Figur 8:: die Vorrichtung nach Figur 6 und Figur 7 in einer Ansicht auf den Tunnel für die Schweißnaht;

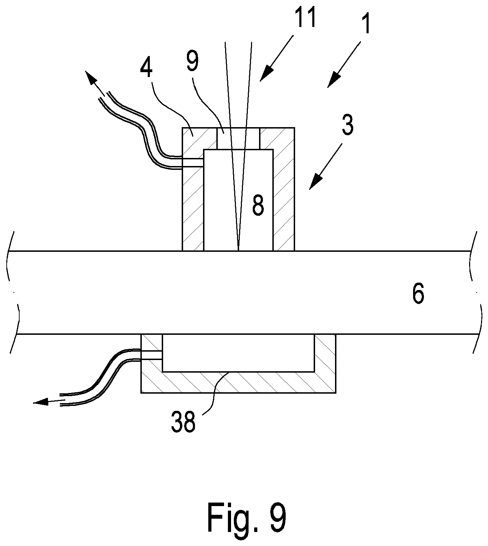

- Figur 9:: stark schematisiert die Vorrichtung mit einer weiteren Vakuumkammer auf der anderen Seite der Schweißnaht bzw. des Schweißstoßes.

Die Vakuumlösungen zum Strahlschweißen, beispielsweise Elektronenstrahlschweißen oder Laserstrahlschweißen im Stand der Technik betreffen insbesondere relativ große Einrichtungen, die dazu dienen, "endlose" Nähte, wie zum Beispiel Rohre längs oder quer zu schweißen. Insbesondere bei recht dickwandigen Aluminiumkonstruktionen ist es notwendig, einerseits eine sehr hohe Eindringtiefe zu erzielen und andererseits können in diesen Bereichen relativ komplexe Formgebungen vorhanden sein, die es notwendig machen, die Schweißvorrichtung gegebenenfalls insbesondere an Ecken anpassbar zu machen. Wenn zum Beispiel zwei quadratische oder rechteckige Blöcke aneinandergeschweißt werden mit einer Umfangsschweißnaht, kann üblicherweise das Vakuum im Bereich der Kanten nicht aufrechterhalten werden.

Grundsätzlich erfordert die Realisierung eines Vakuums, dass aus einem abgeschlossenen Raum mehr Gas, insbesondere Luft evakuiert wird, als von außen nachfließen kann. Bei Vorrichtungen der vorgenannten Art sitzt die Vorrichtung auf zwei üblicherweise ebenen Flächen auf, die zu den Blöcken gehören, die miteinander verschweißt werden. Ein Eintritt oder Zufluss von Luft von außen kann hierbei grundsätzlich unter der aufsitzenden Kante der Vorrichtung (hier jedoch recht wenig) im Bereich des Schweißstoßes, vor allem aber im Bereich der gefertigten Schweißnaht liegen, da die diese üblicherweise über die Blöcke hinaussteht und zudem uneben ist. Eine hohe Evakuierungsrate ist daher üblicherweise wesentlich. Üblicherweise wird dies dadurch erreicht, dass eine Vakuumpumpe mit einer großen Kapazität verwendet wird und die Evakuierungsrate so hoch wie möglich gehalten wird. Die Absaugrate kann beispielsweise dadurch erhöht werden, dass der Absaugleitungsquerschnitt sehr groß ist, was wiederum dazu führt, dass dadurch die Vorrichtung vergrößert und unhandlicher wird. Insbesondere bei großen und komplexen Bauteilen, die verschweißt werden müssen, führt dies aber wiederum dazu, dass im Umkehrschluss hierdurch die Evakuierung nicht so gut ist wie sie sein müsste und damit das realisierte Vakuum nicht so groß sein kann, wie die Absaugleistung es versprechen würde. Insbesondere wenn aufgrund komplexer Bauteile und einer komplexen Führung einer solchen Einrichtung die Absaugleitungen relativ lang sind, wird die Absaugleistung relativ stark herabgesetzt. Die effektive Luftabsaugleistung einer Pumpe kann um den Faktor 10 aufgrund einer 2 m langen Absaugleitung mit einem relativ kleinen Durchmesser sinken.

Erfindungsgemäß wird dies dadurch umgangen, dass das Vakuum in unmittelbarer Nähe der glocken-oder haubenartigen Abdeckeinrichtung oder sogar in dieser erzeugt wird. Dem entsprechend wird die Einrichtung zum Erzeugen des Vakuums, also eine Vakuumpumpe oder eine entsprechend ausgebildete Einrichtung, zusammen mit der Abschirmeinrichtung über die Werkstücke entlang der geplanten Schweißnaht geführt.

Obwohl es eine Vielzahl geeigneter Vakuumpumpentypen gibt, wird vorzugsweise bei der Erfindung das Venturi-Prinzip eingesetzt, bei dem der Venturi-Effekt innerhalb einer Gasströmungsleitung in der Wand der Abschirmeinrichtung realisiert wird. Hierbei kann auch eine Mehrzahl von Strömungsleitungen mit Venturi-Prinzip verwirklicht werden.

Das erfindungsgemäße Prinzip der Nutzung des Venturi-Effekts in den Wandungen hat eine Mehrzahl von Vorteilen. Einerseits ist der Aufbau hierdurch relativ einfach, zudem ist eine solche Venturi-Düsenanordnung auch sehr robust, was die Verwendung in dem schmutzanfälligen Umfeld einer Verschweißung betrifft. Ein weiterer entscheidender Vorteil ist aber, dass durch das Vorsehen von zumindest einer, vorzugsweise aber mehrerer entsprechender Leitungen in der Wandung der Abdeck-oder Abschirmeinrichtung, also dem glocken- oder haubenartigen Element, unter dem das Vakuum eingerichtet wird, dafür sorgt, dass diese Einrichtung gekühlt wird. Hierbei können relativ große Gasströmungen realisiert werden, so dass ein guter Kühleffekt bewirkt wird und zudem in sehr wirksamer Weise Luft, auch nachströmende Luft, aus dem Bereich unter der Abdeckung evakuiert wird.

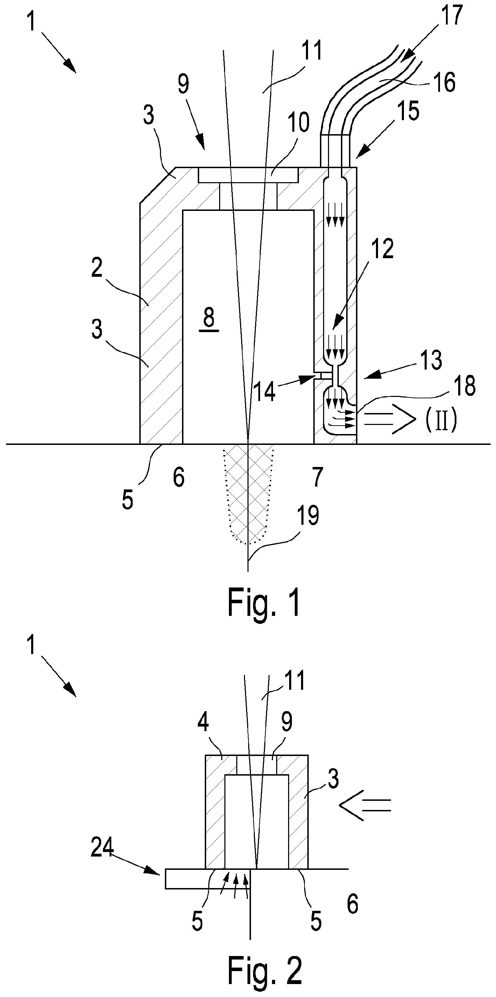

In Figur 1 ist stark schematisiert die erfindungsgemäße Vorrichtung 1 gezeigt, wobei die Vorrichtung 1 die Abschirmeinrichtung 2 besitzt, wobei die Abschirmeinrichtung 2 hauben- oder glockenartig ausgebildet ist, mit einer umlaufenden Seitenwandung 3 und einer Deckenwandung 4, wobei die umlaufende Seitenwandung 3 gegenüber der Deckenwandung 4 eine freie umlaufende Kante besitzt, mit der die Einrichtung 2 auf einem ersten Werkstück 6 und einem zweiten Werkstück 7 aufsteht. Die umlaufende Seitenwandung 3 und die Deckenwandung 4 der Schweißabdeckung 2 sowie das erste Werkstück 6 und das zweite Werkstück 7 begrenzen im Betrieb somit einen Hohlraum 8 der Schweißabdeckung 2.

In der Deckenwandung 4 befindet sich eine Öffnung 9, die gegebenenfalls außenseitig mit einem Laserglas 10 abgedeckt ist, um einen Laserstrahl 11 hindurchtreten zu lassen, wobei der Laserstrahl 11 gegebenenfalls mit einem Lasergenerator erzeugt wird, der an der Schweißabdeckung 2 angeordnet ist (nicht gezeigt).

In der umlaufenden Seitenwandung 3 ist von der Deckenwandung 4 in Richtung zu der umlaufenden Kante 5 eine Bohrung 12 angeordnet, welche parallel zur Längserstreckung der umlaufenden Seitenwandung 3 verläuft. Die Bohrung 12 besitzt zumindest eine Verengung 13 als Venturi-Stufe, kann jedoch auch eine Mehrzahl von Verengungen 13 über ihren Längsverlauf besitzen. Im Bereich der Verengung 13 ist vom Hohlraum 8 her eine Querbohrung 14 vorgesehen, welche im Bereich der Verengung in die Bohrung 12 mündet. Oberseitig im Bereich der Deckenwandung 4 besitzt die Bohrung 12 einen Fluidanschlussbereich 15 zur Aufnahme eines Fluidzuführungsschlauchs 16.

Durch den Fluidzuführungsschlauchs 16 kann ein Fluid entsprechend der Pfeilrichtungen 17 durch die Bohrung 12 geführt werden, wobei durch die Verengung 13 in bekannter Weise ein Venturi-Effekt herbeigeführt wird. Durch diesen Venturi-Effekt wird durch die Querbohrung 14 Gas bzw. Luft aus dem Hohlraum 8 der Schweißabdeckung 2 herausgesaugt.

Die Bohrung 12 besitzt einen Fluidauslass 18, der etwas entfernt von der umlaufenden Kante 5 nach außen gerichtet ist.

Im Betrieb wird die Schweißabdeckung 2 der Vorrichtung 1 so geführt, dass der Laserstrahl auf den Schweißstoß 19 zwischen dem ersten Werkstück 6 und dem zweiten Werkstück 7 gerichtet ist.

In einer Weiterbildung (nicht gezeigt) sind eine Mehrzahl von Bohrungen 12 vorhanden, wobei beispielsweise die Bohrungen 12 über einen Ringkanal (nicht gezeigt) in der Deckenwandung 4 mit Fluid versorgt werden, wobei ein entsprechender Fluidanschlussbereich 15 des Ringkanals zur Aufnahme eines Fluidzuführungsschlauchs 16 entsprechend vorhanden ist. Bei einer Mehrzahl von Bohrungen 12 ist selbstverständlich von Vorteil, dass am Umfang der umlaufenden Seitenwandung 3 an mehreren Stellen über dem entsprechend mehrfach vorhandenen Querbohrungen 14 Gas abgesaugt werden kann. Darüber hinaus wird der Kühleffekt durch das Fluid, welches durch die Bohrungen 12 geführt wird, besser, so dass die gesamte Schweißabdeckung 2 besser gekühlt werden kann.

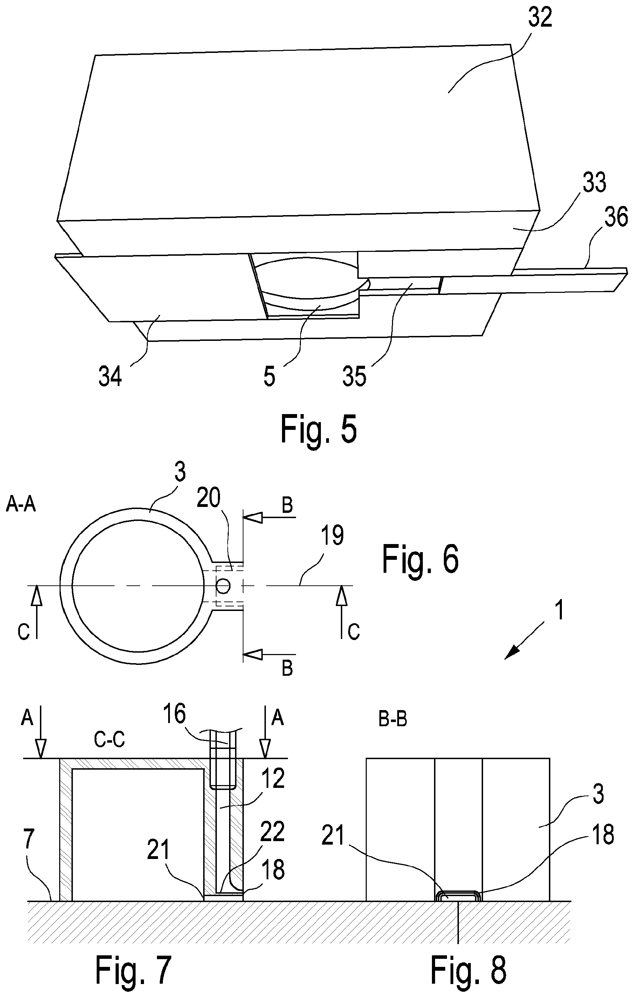

In den Figuren 6, 7 und 8 sind schematische Querschnitte durch eine erfindungsgemäße Vorrichtung, insbesondere die Schweißabdeckung gezeigt, wobei aus Übersichtsgründen hier auf einige Details, wie die Öffnung in der Deckenwandung, verzichtet wurde.

Figur 6 zeigt einen Querschnitt oberhalb von den Werkstücken 6, 7, wobei erkennbar ist, dass im Bereich einer geplanten Schweißnaht, also des Schweißstoßes, der in dieser Figur der Schnittlinie C-C entspricht, einem Laserstrahl nacheilend bzw. der Bewegungsrichtung der Schweißabdeckung 2, welche auch den Pfeilen B entspricht, die umlaufende Seitenwandung 3 mit einem Vorsprung 20 nach außen verlängert ausgebildet ist. Im Bereich eines Schweißstoßes 19 (Figur 8) ist unterhalb eines Gasauslasses 18 ein Durchtrittstunnel 21 für eine Schweißnaht (nicht gezeigt) vorgesehen. Der Durchtrittstunnel 21 besitzt dabei eine Breite, die etwas geringer ist als die Breite des Vorsprungs 20, jedoch so breit ist, dass eine üblicherweise mit dem Laser erzeugte Schweißnaht hier durchtreten kann.

Innerhalb des Durchtrittstunnels 21 ist vorzugsweise eine Mehrzahl von Bürstenpaketen, insbesondere metallischen Bürstenpaketen (nicht gezeigt) vorgesehen, welche die umlaufende Seitenwandung 3 verlängernd mit der umlaufenden Kante 5 vorzugsweise abschließen, so dass diese auf einer Schweißnaht satt aufliegen und von dieser ausgelenkt werden und bei einer Bewegung auf dieser entlanggeführt werden. Anstelle von Bürstenpaketen können auch Lamellen oder Dichtlippen aus einem wärmebeständigen Material, insbesondere einer Metallfolie oder einem dünnen Metallblech oder einem wärmebeständigen Kunststoff, wie PTFE, vorhanden sein.

Auch eine alternierende Anordnung von Bürstenpaket(en) und Dichtlippe(n) ist im Rahmen der Erfindung denkbar. Die eine oder mehreren Venturi-Stufen in Form der Verengung 13 und der Querbohrung 14 sind in den Figuren 6, 7 und 8 nicht gezeigt, sind aber selbstverständlich vorhanden. Zusätzlich kann im Bereich der Tunneldecke 22 des Durchtrittstunnels 21 eine oder mehrere Querbohrungen in die Bohrung 12 vorgesehen sein mit entsprechenden Venturi-Verengungen, um durch den Durchtrittstunnel 21 von außen zu Hohlraum 8 hin strömende Gase abzusaugen und gleichzeitig diesen Bereich intensiv zu kühlen.

Bei der Ausführungsform nach der Erfindung, bei der zumindest eine fluidführende Bohrung 12 in der umlaufenden Seitenwandung 3 vorhanden ist, vorzugsweise eine Mehrzahl von Bohrungen 12, ist von Vorteil, dass in einfacher, aber zuverlässiger Weise ein Unterdruck in dem Hohlraum 8 aufgebaut und aufrechterhalten werden kann und zudem eine gute Kühlung der gesamten Vorrichtung möglich ist. Hierbei können die Bohrungen 12 mit einem Gas als Fluid beaufschlagt werden. Es ist in Fällen, in denen die Schweißabdeckung 2 besonders klein ausgebildet ist und insofern sich stark aufheizt, auch denkbar, die Bohrungen mit einer Kühlflüssigkeit als Fluid zu durchströmen, welche ebenfalls den Venturi-Effekt und einen Wasserströmungs-Vakuum-Pumpeneffekt herbeiführt, weil die Kühlung gegebenenfalls noch intensiver ist. Hierbei wird die austretende Kühlflüssigkeit aufgefangen und rückgeführt.

Eine besondere Problematik beim Schweißen von insbesondere quadratischen oder rechteckigen Blöcken ist, dass im Bereich von Ecken die Schweißabdeckung immer größer sein wird als der Durchmesser des Laserstrahls, so dass ab einem bestimmten Abstand zur Kante der Hohlraum 8 über die zu schweißenden Werkstücke überstehen würde und somit das Vakuum nicht mehr aufrechterhalten werden kann. Bekannte Vorrichtungen aus dem Stand der Technik sind nicht dazu geeignet hier Abhilfe zu schaffen, da sie sich nur mit "endlosen" Schweißnähten beschäftigen.

Die Aufrechterhaltung des Vakuums auch über eine Kante hinaus ist jedoch wesentlich für eine gute Schweißnahtqualität.

Das erfindungsgemäße Verfahren sieht vor, dass an einer Kante ein Blockelement 24 formschlüssig und mit der Kante abschließend angeordnet wird, so dass die Schweißabdeckung 2 über die Kante hinaus allseitig mit der umlaufenden Kante 5 formschlüssig aufliegt, so dass das Vakuum gehalten werden kann. Ein solches Blockelement 24 kann an der Kante mit entsprechenden Spannelementen angeordnet werden. Darüber hinaus ist es möglich, seitlich vom Schweißstoß beispielsweise Schwalbenschwanzführungen einzufräsen und das Blockelement 24 mit entsprechenden Schwalbenschwänzen auszubilden, so dass das Blockelement fest formschlüssig und abschließend an der Kante angeordnet ist. Hierbei ist zudem von Vorteil, dass durch die Schwalbenschwanzanordnung die zu verschweißenden Blöcke in besonders guter Weise aneinander fixiert sind. Nachdem die Schweißnaht vervollständigt ist, wobei gegebenenfalls um das Blockelement nicht an den Werkstücken anzuschweißen, ein geringer Abstand von der Kante gehalten wird, wird der Schweißvorgang beendet, das Vakuum durch Abstellen der Strömung ebenfalls aufgelöst und die Schweißabdeckung 2 abgenommen. Anschließend wird das Blockelement 24 umgesetzt, indem es aus den Schwalbenschwanzführungen herausgenommen wird und in entsprechende Schwalbenschwanzführungen der anderen Kante eingesteckt wird und dann der Schweißvorgang dadurch begonnen, dass die Schweißabdeckung entsprechend wieder aufgesetzt wird, das Vakuum gezogen wird und gegebenenfalls die Schweißabdeckung ebenfalls mit einem geringen Abstand von der Kante mit der Bewegung und damit der Laser mit der Schweißung beginnt. Der geringe Abstand zur Kante, bei dem die Schweißung beendet oder begonnen wird, ist unproblematisch, da es sich bei der Verschweißung derartiger Blöcke um ausgesprochene Tiefverschweißungen handelt, so dass eine ausreichende Überlappung vorhanden ist. Gegebenenfalls können diese sehr geringen Bereiche, die auch keine besondere Tiefe aufweisen, da sie jeweils aufgrund der 90°-Versetzung der Schweißungen nicht sehr tief sind, mit Hand nachgeschweißt werden.

Die Abstände der Schwalbenschwanzführungen sind vorzugsweise immer gleich, so dass das Blockelement 24 vorzugsweise an einer Seite Schwalbenschwänze besitzt, die dem einen Abstand einer Kante entsprechen, wobei die andere Kante Schwalbenschwänze in einem anderen Abstand besitzt, so dass die Schwalbenschwanzführungen der Kanten nicht auf gleicher Höhe sitzen.

Die Schwalbenschwanzführungen können auch einen gleichen Abstand haben, aber um einen gewissen Betrag versetzt sein, wobei dann das Blockelement 24 so groß gewählt ist, dass selbst bei einem solchen Versatz die Schweißabdeckung 2 zuverlässig von unten mit dem Blockelement 24 abgedeckt wird.

Bei einer weiteren Ausführungsform der Vorrichtung bzw. einer weiteren Ausführungsform des Verfahrens wird eine automatisierte Vorrichtung verwendet, die an einer oder an beiden Seiten der Schweißabdeckung 2 angeordnet ist.

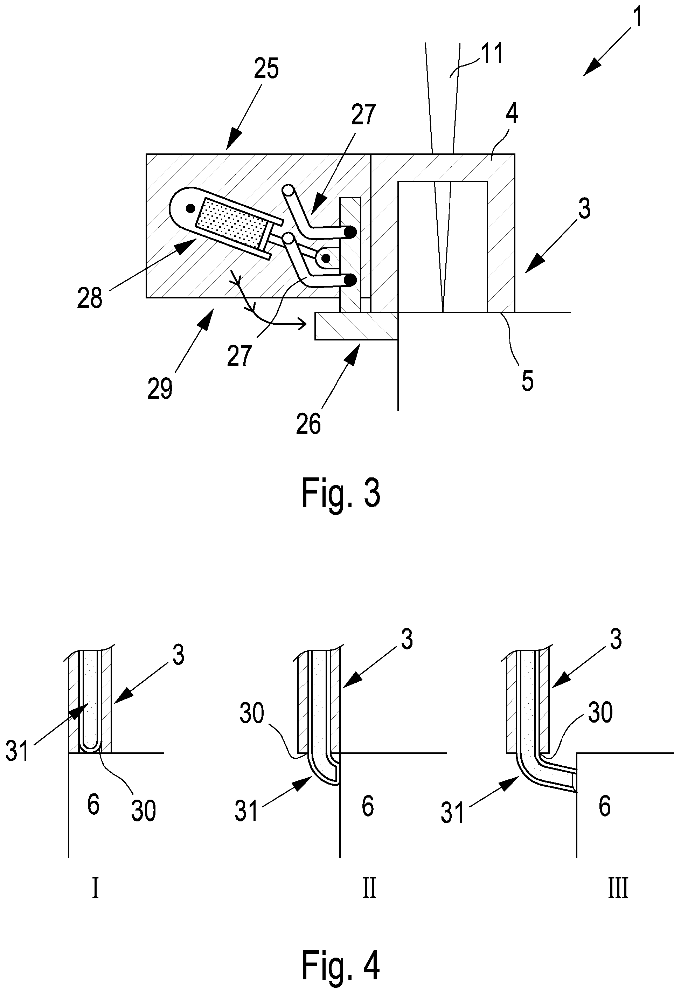

Diese Abdeckeinrichtung 25 besitzt einen automatisch betätigbaren Verlängerungsblock, wenn die Schweißabdeckung 2 die Ecke erreicht, an die entsprechende Kante herangeschwenkt wird und dort gehalten wird, während die Schweißabdeckung 2 über diesen Verlängerungsblock 26 hinweggleitet. Hierbei wird der Verlängerungsblock 26 in dem Moment, wo unter ihm kein Werkstück 6, 7 sich mehr befindet, automatisch mittels einer Führungsstruktur oder einer Führungskulisse nach unten ausgeschwenkt, wobei beispielsweise zwei Schlitze die Bewegung steuern und ein Betätigungselement, beispielsweise ein pneumatischer oder hydraulischer Zylinder 27, den Verlängerungsblock 26 betätigt. Steuerkurven 27 des Betätigungselements 28 und der Verlängerungsblock 26 sind vorzugsweise an einer Tragstruktur 29 angeordnet, welche wiederum an der Vorrichtung 1 angeordnet ist. Bei einer weiteren vorteilhaften Ausführungsform (Figur 4) sind im Bereich der umlaufenden Seitenwandung 3 unten Schlitze 30 angeordnet, wobei die Schlitze oder der Schlitz beispielsweise den halbkreisförmigen Bogen beschreibt, so dass die vordere Hälfte der umlaufenden Kante mit einem Schlitz versehen ist.

In dem Schlitz ruht ein insbesondere durch Aufblasen ausfahrbares und haftendes Kissen 31, welches sich an die Seitenwandung der Werkstücke 6, 7 anlegt und dort haftet, während die Schweißabdeckung 2 mit der umlaufenden Seitenwandung 3 bzw. der umlaufenden Kante 5 über die Kante hinausbewegt wird.

Das Kissen 31 ist insbesondere als aufblasbare Dichtung ausgebildet, welche so elastisch ist, dass sie entsprechend an den Werkstücken haften kann.

Hierbei ist es vorteilhaft, dass die Expandierung des Kissens 31 oder der aufblasbaren Dichtung 31 erst dann erfolgt, wenn der entsprechende Abschnitt der umlaufenden Kante 5 über die Kante herüber sich bewegt. Die Dichtung bewegt sich vorzugsweise selbsttätig nach innen (Figur 4 Mitte), da dies der kleinste Energiezustand ist. Eine vergrößerte Steifigkeit an der Spitze der Dichtung erhöht das Bestreben nach innen sich zu bewegen.

Bei einer weiteren vorteilhaften Ausführungsform (Figur 5) ist die Schweißabdeckung etwas größer ausgebildet, so dass die Schweißabdeckung insgesamt kastenförmig ausgebildet ist oder innerhalb einer kastenartigen Anordnung 32 angeordnet ist.

Die kastenartige Anordnung besitzt unterseitig die Durchtrittsöffnung für den Laserstrahl, welche von der umlaufenden Kante 5 begrenzt wird. Zudem besitzt die kastenartige Anordnung eine ebene Bodenwandung 33, wobei in der ebenen Bodenwandung 33 in Bewegungsrichtung voreilend eine verschiebliche Platte mit der Bodenwandung 33 abschließend angeordnet ist, welche, wenn die Öffnung, die von der umlaufenden Kante 5 begrenzt wird, in den Bereich der Kante kommt, mit der entsprechenden Kante abschließend über die Öffnung bewegt wird, so dass sichergestellt ist, dass kein Vakuumleck entsteht. Auf der gegenüberliegenden Seite der Öffnung ist eine Durchtrittsnut 35 vorgesehen, die sich in der Bodenwandung 33 befindet, so dass eine entsprechende Schweißnaht hierin geführt werden kann. In der Durchtrittsnut 35 ist ebenfalls ein plattenartiges Element geführt, welches in der Lage ist, in die von der umlaufenden Kante 5 begrenzte Öffnung hineinzuragen, um eine Vakuumdichtigkeit im Bereich der Kante, wenn das Schweißverfahren begonnen wird, sicherzustellen. Die verschiebliche Platte 34 und das plattenartige Element 36 werden nur im Bereich der Kante verschoben und befinden sich ansonsten außerhalb der umlaufenden Kante 5, um vor der Schweißhitze geschützt zu sein.

Bei einer weiteren vorteilhaften Ausführungsform des Verfahrens wird eine bewegliche Unterdruckkammer 38 unterhalb der Schweißabdeckung 2 auf der anderen Seite des Schweißstoßes mitgeführt, um zu verhindern, dass durch den Schweißstoß Gas in den Hohlraum 8 geführt wird und um eine verbesserte Schweißnahtqualität zu gewährleisten.

Die Unterdruckkammer 38 kann im Wesentlichen wie die Schweißabdeckung 2 oder etwas größer ausgebildet sein, wobei das Vakuum vorzugsweise nach dem gleichen Prinzip erzeugt wird.

Bei wiederum einer vorteilhaften Ausführungsform kann, wenn Blöcke geschweißt werden, die später zu einem größeren Hohlraum zusammengesetzt werden sollen, der Hohlraum schon aus den nichtverschweißten Blöcken zusammengesetzt werden, aneinander fixiert werden und anschließend der gesamte Hohlraum unter Vakuum gesetzt werden, so dass bei einer Verschweißung von außen durch die gegebenenfalls nicht ganz dichten Schweißstöße einerseits Gas nach innen gesaugt wird und im Bereich der Schweißabdeckung der Hohlraum 8 leichter mit Vakuum beaufschlagt werden kann und zudem in diesem Bereich die Schweißnahtqualität dadurch verbessert werden kann, dass das Gas aus dem Schweißstoß unmittelbar vor dem Verschweißen evakuiert ist.

## Patentansprüche

1. Vorrichtung zum Schweißen unter Vakuum, aufweisend eine glocken- oder haubenartige Schweißabdeckung (2) mit einer umlaufenden Seitenwandung (3) und einem von dieser begrenzten Hohlraum (8), wobei eine umlaufende freie Kante (5) vorhanden ist, mit der die Schweißabdeckung (2) auf einer ebenen Fläche aufsetzbar ist, so dass der Hohlraum (8) von der ebenen Fläche und der umlaufenden Wandung (5) und ggf. einer Deckenwandung (4) abgeschlossen wird,
**dadurch gekennzeichnet, dass**
in der umlaufenden Seitenwandung zumindest eine Anordnung
mit einer Bohrung (12) vorhanden ist mit einem Anschlussbereich (15) für eine Fluidzuführung und einem Fluidauslass (18), wobei in der Bohrung (12) eine Verengung (13) zur Erzeugung eines Venturieffekts vorhanden ist und zudem eine Querbohrung (14) von dem Hohlraum (8) in die Bohrung (12) vorhanden ist um über den Venturieffekt durch die Querbohrung (14) aus dem Hohlraum (8) Gas zur Erzeugung eines Unterdrucks anzusaugen.

2. Vorrichtung nach Anspruch 1, **dadurch gekennzeichnet, dass** eine Mehrzahl von Anordnungen mit der Bohrung (12) in der umlaufenden Seitenwandung vorgesehen sind.

3. Vorrichtung nach Anspruch 1 oder 2, **dadurch gekennzeichnet, dass** die Mehrzahl von Anordnungen über einen Ringkanal mit Fluid gespeist wird und der Ringkanal über einen oder mehrere Fluidzuführbereiche (15) verfügt.

4. Vorrichtung nach einem der vorhergehenden Ansprüche, **dadurch gekennzeichnet, dass** die Fluidauslässe (18) der zumindest einen Anordnung in einen zweiten Ringkanal mündet, in dem das Fluid gesammelt über einen oder mehrere Auslässe abgeführt wird.

5. Vorrichtung nach einem der vorhergehenden Ansprüche, **dadurch gekennzeichnet, dass** im Bereich einer geplanten Schweißnaht, die umlaufende Seitenwandung (3) mit einem Vorsprung (20) nach außen verlängert ausgebildet ist, wobei im Bereich eines Schweißstoßes (19) ein Durchtrittstunnel 21 für eine Schweißnaht vorgesehen

6. Vorrichtung nach Anspruch 5, **dadurch gekennzeichnet, dass** der Durchtrittstunnel (21) eine Breite besitzt, die so breit ist, dass eine üblicherweise mit dem Laser erzeugte Schweißnaht hier durchtreten kann.

7. Vorrichtung nach Anspruch 5 oder 6, **dadurch gekennzeichnet, dass** oberhalb des Durchtrittstunnels (21) eine Bohrung (12) verläuft, wobei die Bohrung (12) oberhalb des Durchtrittstunnels (21) parallel zum Durchtrittstunnel (21) nach außen verläuft, so dass der Durchtrittstunnel (21) mit dem durch die Bohrung strömenden Fluid kühlbar ist.

8. Vorrichtung nach einem der Ansprüche 5 bis 7, **dadurch gekennzeichnet, dass** Innerhalb des Durchtrittstunnels 21 ein oder mehrere Bürstenpaketen, insbesondere metallischen Bürstenpaketen vorgesehen sind, welche die umlaufende Seitenwandung (3) verlängernd, mit der umlaufenden Kante (5) vorzugsweise abschließen, so dass diese auf einer Schweißnaht aufliegen und von dieser ausgelenkt werden und bei einer Bewegung der Schweißabdeckung (2) auf der Schweißnaht entlanggeführt werden.

9. Vorrichtung nach einem der Ansprüche 5 bis 8, **dadurch gekennzeichnet, dass** zusätzlich oder anstelle von Bürstenpaketen Lamellen oder Dichtlippen aus einem wärmebeständigen Material, insbesondere einer Metallfolie oder einem dünnen Metallblech oder einem wärmebeständigen Kunststoff, wie PTFE, vorhanden sind, wobei Bürstenpakete und Lamellen oder Dichtlippen alternierend oder aufeinanderfolgend angeordnet sind.

10. Vorrichtung nach einem der Ansprüche 5 bis 9, **dadurch gekennzeichnet, dass** im Bereich einer Tunneldecke (22) des Durchtrittstunnels (21) eine oder mehrere Querbohrungen (14) in die Bohrung (12) mündend vorgesehen sind mit jeweils einer zusammenwirkenden Venturi-Verengungen (13), um durch den Durchtrittstunnel (21) von außen zum Hohlraum (8) hin strömende Gase abzusaugen und gleichzeitig diesen Bereich intensiv zu kühlen.

11. Vorrichtung nach einem der vorhergehenden Ansprüche, **dadurch gekennzeichnet, dass** zum Schweißen in der unmittelbaren Nähe von Kanten zu verschweißender Werkstücke (6,7) eine automatisierte Abdeckeinrichtung (25) vorhanden ist, die an einer oder an beiden Seiten der Schweißabdeckung (2) angeordnet ist, wobei die Abdeckeinrichtung (25) einen automatisch betätigbaren Verlängerungsblock (26) besitzt und welcher, wenn die Schweißabdeckung (2) die Kante erreicht, an die entsprechende Kante herangeschwenkt wird und dort gehalten wird, während die Schweißabdeckung (2) über diesen Verlängerungsblock (26) hinweggleitet, wobei der Verlängerungsblock (26) in dem Moment, wo unter ihm kein Werkstück (6, 7) sich mehr befindet, automatisch mittels einer Führungsstruktur oder einer Führungskulisse nach unten ausgeschwenkt wird, wobei beispielsweise zwei Steuerkurven (27) die Bewegung steuern und ein Betätigungselement, beispielsweise ein pneumatischer oder hydraulischer Zylinder (28), den Verlängerungsblock (26) betätigt, wobei die Steuerkurven (27), das Betätigungselement (28) und der Verlängerungsblock (26) an einer Tragstruktur 29 angeordnet sind, welche wiederum an der Vorrichtung 1 angeordnet ist

12. Vorrichtung nach einem der vorhergehenden Ansprüche, **dadurch gekennzeichnet, dass** im Bereich der umlaufenden Seitenwandung (3) von der umlaufenden kante (5) her unten Schlitze (30) angeordnet sind welche sich von der umlaufenden kante (5) in die umlaufende Wandung (3) hineinerstrecken, wobei die Schlitze oder der Schlitz (30) beispielsweise einen halbkreisförmigen Bogen beschreibt, so dass die in Bewegungsrichtung vordere Hälfte der umlaufenden Kante (5) mit einem Schlitz (30) versehen ist, wobei in dem Schlitz ruht ein insbesondere durch Aufblasen ausfahrbares und haftendes Kissen (31) oder eine Dichtung (31), welches sich an die Seitenwandung der Werkstücke (6, 7) anlegt und dort haftet, während die Schweißabdeckung 2 mit der umlaufenden Seitenwandung (3) bzw. der umlaufenden Kante (5) über die Kante hinausbewegt wird.

13. Vorrichtung nach einem der Ansprüche 1 bis 11, **dadurch gekennzeichnet, dass** die Schweißabdeckung kastenartig ausgebildet ist oder innerhalb einer kastenartigen Anordnung (32) angeordnet ist, wobei die kastenartige Anordnung (32) unterseitig eine Durchtrittsöffnung (37) für den Laserstrahl (11) besitzt, welche von der umlaufenden Kante (5) begrenzt wird, wobei die kastenartige Anordnung (32) eine ebene Bodenwandung (33), wobei in der ebenen Bodenwandung (33) in Bewegungsrichtung voreilend eine verschiebliche Platte (34) mit der Bodenwandung (33) abschließend angeordnet ist, welche, wenn die Öffnung (37), die von der umlaufenden Kante (5) begrenzt wird, in den Bereich der Kante kommt, mit der entsprechenden Kante abschließend über die Öffnung (37) bewegbar ist, so dass sichergestellt ist, dass kein Vakuumleck entsteht, wobei auf der gegenüberliegenden Seite der Öffnung eine Durchtrittsnut (35) vorgesehen ist, die sich in der Bodenwandung (33) befindet, so dass eine entsprechende Schweißnaht hierin geführt werden kann. In der Durchtrittsnut (35) ist ebenfalls ein plattenartiges Element (36) geführt, welches in der Lage ist, in die von der umlaufenden Kante (5) begrenzte Öffnung (37) hineinzuragen, um eine Vakuumdichtigkeit im Bereich der Kante, wenn das Schweißverfahren begonnen wird, sicherzustellen. Die verschiebliche Platte (34) und das plattenartige Element (36) werden nur im Bereich der Kante verschoben und befinden sich ansonsten außerhalb der umlaufenden Kante (5), um vor der Schweißhitze geschützt zu sein.

14. Verfahren zum Schweißen unter Vakuum mittels Laser, wobei eine Vorrichtung nach einem der vorhergehenden Ansprüche längs einen Schweißstosses (19) zwischen einem ersten Werkstück (6) und einem zweiten Werkstück (7) geführt wird und im Bereich des Schweißstosses (19) ein Laserstrahl (11) die Werkstücke (6,7) aufschmilzt und derart miteinander verbindet.

15. Verfahren nach Anspruch 14, **dadurch gekennzeichnet, dass** die Bohrungen (12)n der Vorrichtung(1) mit einem Gas oder einer Flüssigkeit durchströmt werden.

16. Verfahren nach Anspruch 14 oder 15, **dadurch gekennzeichnet, dass** die zugeführte Flüssigkeit am Fluidauslass (18) aufgenommen und insbesondere abgeführt wird.

17. Verfahren nach einem der Ansprüche 14 bis 16, **dadurch gekennzeichnet, dass** zum Verschweißen von Hohlkörpern, insbesondere aus Aluminium, während des Schweißvorganges der Hohlkörper evakuiert wird bis zu einem gewünschten Unterdruck, so dass der Schweißstoß (19) im Bereich der Schweißabdeckung den Unterdruck unterstützt oder kein Gas aus dem Innenraum des Hohlkörpers durch den Unterdruck in der Schweißabdeckung (2) in diese hineingezogen werden.

18. Verfahren nach einem der Ansprüche 14 bis 16, **dadurch gekennzeichnet, dass** eine bewegliche Unterdruckkammer (38) unterhalb der Schweißabdeckung (2) auf der anderen Seite des Schweißstoßes (19) mitgeführt, um zu verhindern, dass durch den Schweißstoß Gas in den Hohlraum (8) geführt wird und um eine verbesserte Schweißnahtqualität zu gewährleisten.

19. Verfahren nach einem der Ansprüche 14 bis 16, **dadurch gekennzeichnet, dass** an einer gemeinsamen Kante der Werkstücke (6,7) welche zum Verschweißen von der Vorrichtung (1) überfahren werden muss zur Sicherung des Vakuums ein Blockelement (24) formschlüssig und mit der Kante abschließend angeordnet wird, so dass die Schweißabdeckung (2) über die Kante hinaus allseitig mit der umlaufenden Kante (5) formschlüssig aufliegt, so dass das Vakuum gehalten werden kann.

20. Verfahren nach Anspruch 19, **dadurch gekennzeichnet, dass** das Blockelement (24) an der Kante mit entsprechenden Spannelementen angeordnet wird und/oder seitlich vom Schweißstoß (19) beispielsweise Schwalbenschwanzführungen eingefräst oder in anderer Weise angeordnet werden und das Blockelement (24) mit entsprechenden Schwalbenschwänzen auszubilden, so dass das Blockelement (24) fest, formschlüssig und abschließend an der Kante angeordnet ist.

21. Verfahren nach Anspruch 19 oder 20, **dadurch gekennzeichnet, dass** nachdem die Schweißnaht vervollständigt ist das Vakuum durch Abstellen der Strömung ebenfalls aufgelöst und die Schweißabdeckung (2) abgenommen wird und anschließend das Blockelement (24) umgesetzt wird, indem es aus den Schwalbenschwanzführungen herausgenommen wird und in entsprechende Schwalbenschwanzführungen der anderen Seite der Kante eingesteckt wird und dann der Schweißvorgang dadurch begonnen wird, dass die Schweißabdeckung (2) entsprechend wieder aufgesetzt wird, das Vakuum gezogen wird und gegebenenfalls die Schweißabdeckung (2) ebenfalls mit einem geringen Abstand von der Kante mit der Bewegung und damit der Laser mit der Schweißung beginnt.

22. Verfahren nach einem der Ansprüche 19 bis 21, **dadurch gekennzeichnet, dass** die Abstände der Schwalbenschwanzführungen sind gleich angeordnet werden, so dass das Blockelement (24) vorzugsweise an einer Seite Schwalbenschwänze besitzt, die dem einen Abstand der Schwalbenschwanzführungen an einer Seite der Kante entsprechen, wobei die andere Seite der Kante Schwalbenschwänze in einem anderen Abstand besitzt, so dass die Schwalbenschwanzführungen der Kanten nicht auf gleicher Höhe sitzen.

23. Verfahren nach einem der Ansprüche 19 bis 21, **dadurch gekennzeichnet, dass** die Schwalbenschwanzführungen einen gleichen Abstand aufweisen, aber um einen gewissen Betrag versetzt an den jeweiligen Seiten der Kante angeordnet werden, wobei dann das Blockelement (24) so groß gewählt ist, dass selbst bei einem solchen Versatz die Schweißabdeckung (2) zuverlässig von unten mit dem Blockelement (24) abgedeckt wird.

24. Verfahren nach einem der Ansprüche 19 bis 23, **dadurch gekennzeichnet, dass** die Schwalbenschwanzführungen in den Werkstücken (6,7) nach abgeschlossener Verschweißung mit Passstücken verschlossen werden.

## Claims

1. Device for welding under vacuum, having a bell- or hood-like welding cover (2) having a circumferential side wall (3) and a cavity (8) delimited by the latter, wherein a circumferential free edge (5) is provided, with which the welding cover (2) can be placed on a flat surface, so that the cavity (8) is surrounded by the flat surface and the circumferential wall (3) and, optionally,
a ceiling wall (4),
**characterized in that** in the circumferential side wall there is at least one arrangement having a bore (12) having a connection area (15) for a fluid supply and a fluid outlet (18), wherein in the bore (12) there is a constriction (13) for producing a Venturi effect and there is also a transverse bore (14) from the cavity (8) into the bore (12) in order to suck in gas from the cavity (8) through the transverse bore (14) via the Venturi effect to produce a vacuum.

2. Device according to claim 1, **characterized in that** a plurality of arrangements with the bore (12) are provided in the circumferential side wall.

3. Device according to claim 1 or 2, **characterized in that** the plurality of arrangements is fed with fluid via an annular channel and the annular channel has one or more fluid supply areas (15).

4. Device according to any of the preceding claims, **characterized in that** the fluid outlets (18) of the at least one arrangement open into a second annular channel, in which the fluid is collected and discharged via one or more outlets.

5. Device according to any of the preceding claims, **characterized in that** in the area of a planned weld seam, the circumferential side wall (3) is designed to be extended outwards having a projection (20), wherein in the area of a weld joint (19) a passage tunnel (21) for a weld seam is provided.

6. Device according to claim 5, **characterized in that** the passage tunnel (21) has a width which is wide enough for a weld seam usually produced with the laser to pass through.

7. Device according to claim 5 or 6, **characterized in that** a bore (12) runs above the passage tunnel (21), wherein the bore (12) above the passage tunnel (21) runs outwards parallel to the passage tunnel (21), so that the passage tunnel (21) can be cooled with the fluid flowing through the bore.

8. Device according to one of claim 5 to 7, **characterized in that** one or more brush packs, in particular metallic brush packs, are provided within the passage tunnel (21), which, extending the circumferential side wall (3), preferably terminate with the circumferential edge (5), so that they rest on a weld seam and are deflected by it and are guided along the weld seam when the welding cover (2) moves.

9. Device according to any of claims 5 to 8, **characterized in that** in addition to or instead of brush packs, lamellae or sealing lips made of a heat-resistant material, in particular a metal foil or a thin metal sheet or a heat-resistant plastic, such as PTFE, are present, wherein brush packs and lamellae or sealing lips are arranged alternately or successively.

10. Device according to any of claims 5 to 9, **characterized in that** in the region of a tunnel ceiling (22) of the passage tunnel (21) one or more transverse bores (14) are provided opening into the bore (12), each having a cooperating Venturi constriction (13) in order to suck off gases flowing through the passage tunnel (21) from the outside to the cavity (8) and at the same time to cool this region intensively.

11. Device according to any of the preceding claims, **characterized in that** for welding in the immediate vicinity of edges of workpieces (6,7) to be welded, an automated covering apparatus (25) is provided, which is arranged on one or both sides of the welding cover (2), wherein the covering apparatus (25) features an automatically actuatable extension block (26) and which, when the welding cover (2) reaches the edge, is pivoted towards the corresponding edge and held there while the welding cover (2) slides over this extension block (26),
wherein the extension block (26) is automatically pivoted downwards by means of a guide structure or a guide slot at the moment when there is no longer any workpiece (6, 7) underneath it, wherein, for example, two control cams (27) control the movement and an actuating element, for example a pneumatic or hydraulic cylinder (28), actuates the extension block (26), wherein the control cams (27), the actuating element (28) and the extension block (26) are arranged on a support structure (29), which in turn is arranged on the device 1.

12. Device according to any of the preceding claims, **characterized in that** in the region of the circumferential side wall (3) from the circumferential edge (5) downwards slots (30) are arranged which extend from the circumferential edge (5) into the circumferential wall (3), wherein the slots or the slot (30) describes, for example, a semicircular arc, so that the front half of the circumferential edge (5) in the direction of movement is provided having a slot (30), wherein an adhesive cushion (31) or a seal (31), which can be extended in particular by inflation, rests in the slot and lies against the side wall of the workpieces (6, 7) and adheres there, while the welding cover (2) with the circumferential side wall (3) or the circumferential edge (5) is moved beyond the edge.

13. Device according to any of claims 1 to 11, **characterized in that** the welding cover is box-shaped or is arranged within a box-like arrangement (32), wherein the box-like arrangement (32) has a passage opening (37) for the laser beam (11) on the underside, which passage opening is delimited by the circumferential edge (5), wherein the box-like arrangement (32) has a flat bottom wall (33), wherein in the flat bottom wall (33) leading in the direction of movement there is arranged a moveable plate (34) which is in contact with the bottom wall (33), which, when the opening (37) which is delimited by the circumferential edge (5) comes into the region of the edge, can be moved with the corresponding edge in contact over the opening (37), so that it is ensured that no vacuum leak occurs, wherein on the opposite side of the opening there is provided a passage groove (35) which is located in the bottom wall (33), so that a corresponding weld seam can be guided here,
A plate-like element (36) is also guided in the passage groove (35), which is able to protrude into the opening (37) delimited by the circumferential edge (5) in order to ensure vacuum tightness in the area of the edge when the welding method is started,
The movable plate (34) and the plate-like element (36) are only moved in the region of the edge and are otherwise located outside the circumferential edge (5) in order to be protected from the welding heat.

14. Method for welding under vacuum by means of a laser, wherein a device according to any of the preceding claims is guided along a weld joint (19) between a first workpiece (6) and a second workpiece (7) and in the region of the weld joint (19) a laser beam (11) melts the workpieces (6, 7) and thus joins them together.

15. Method according to claim 14, **characterized in that** a gas or a liquid flows through the bores (12)n of the device (1).

16. Method according to claim 14 or 15, **characterized in that** the supplied liquid is received and in particular discharged at the fluid outlet (18).

17. Method according to any of claims 14 to 16, **characterized in that** for welding hollow bodies, in particular made of aluminum, the hollow body is evacuated during the welding process to a desired vacuum, so that the weld joint (19) in the region of the welding cover supports the vacuum or no gas from the interior of the hollow body is drawn into the welding cover (2) by the vacuum therein.

18. Method according to any of claims 14 to 16, **characterized in that** a movable vacuum chamber (38) is carried below the welding cover (2) on the other side of the weld joint (19) in order to prevent gas from being led into the cavity (8) through the weld joint and to ensure improved weld seam quality.

19. Method according to any of claims 14 to 16, **characterized in that** on a common edge of the workpieces (6, 7) which has to be passed over by the device (1) for welding, a block element (24) is arranged in a form-fitting manner and in a manner that terminates with the edge in order to secure the vacuum, so that the welding cover (2) rests in a form-fitting manner on all sides with the circumferential edge (5) beyond the edge, so that the vacuum can be maintained.

20. Method according to claim 19, **characterized in that** the block element (24) is arranged on the edge with corresponding clamping elements and/or laterally from the weld joint (19), for example, dovetail guides are milled or arranged in another way and the block element (24) is formed having corresponding dovetails, so that the block element (24) is arranged firmly, in a form-fitting manner and terminally on the edge.

21. Method according to claim 19 or 20, **characterized in that** after the weld seam has been completed, the vacuum is also released by switching off the flow and the welding cover (2) is removed and then the block element (24) is moved by taking it out of the dovetail guides and inserting it into corresponding dovetail guides on the other side of the edge and then the welding process is started by putting the welding cover (2) back on accordingly, drawing the vacuum and, optionally, the welding cover (2) also starts moving at a short distance from the edge and the laser thus starts welding.

22. Method according to any of claims 19 to 21, **characterized in that** the distances of the dovetail guides are arranged equally, so that the block element (24) preferably has dovetails on one side which correspond to the one distance of the dovetail guides on one side of the edge, wherein the other side of the edge has dovetails at a different distance, so that the dovetail guides of the edges are not at the same height.

23. Method according to any of claims 19 to 21, **characterized in that** the dovetail guides have an equal distance but are arranged offset by a certain amount on the respective sides of the edge, wherein the block element (24) is then selected to be so large that, even with such an offset, the welding cover (2) is reliably covered from below by the block element (24).

24. Method according to any of claims 19 to 23, **characterized in that** the dovetail guides in the workpieces (6, 7) are closed having fitting pieces after welding has been completed.

## Revendications

1. Dispositif de soudage sous vide, présentant un couvercle de soudage (2) en forme de cloche ou de capot avec une paroi latérale périphérique (3) et un espace creux (8) délimité par celle-ci, un bord libre périphérique (5) étant présent, avec lequel le couvercle de soudage (2) peut être posé sur une surface plane, de sorte que l'espace creux (8) est fermé par la surface plane et la paroi périphérique (3) et éventuellement une paroi de recouvrement (4),
**caractérisé en ce qu'**il est prévu dans la paroi latérale périphérique au moins un agencement avec un alésage (12) avec une zone de raccordement (15) pour une amenée de fluide et une sortie de fluide (18), une constriction (13) étant prévu dans l'alésage (12) afin de créer un effet Venturi et un alésage transversal (14) étant en outre prévu de l'espace creux (8) dans l'alésage (12) pour aspirer du gaz de l'espace creux (8) par l'effet Venturi à travers l'alésage transversal (14) pour produire une dépression.

2. Dispositif selon la revendication 1, **caractérisé en ce qu'**une pluralité d'agencements sont prévus avec l'alésage (12) dans la paroi latérale périphérique.

3. Dispositif selon la revendication 1 ou 2, **caractérisé en ce que** la pluralité d'agencements est alimentée en fluide par un canal annulaire et le canal annulaire dispose d'une ou de plusieurs zones d'alimentation en fluide (15).

4. Dispositif selon l'une des revendications précédentes, **caractérisé en ce que** les sorties de fluide (18) dudit au moins un agencement débouchent dans un deuxième canal annulaire dans lequel le fluide est collecté et évacué par une ou plusieurs sorties.

5. Dispositif selon l'une des revendications précédentes, **caractérisé en ce que**, dans la zone d'un cordon de soudure prévu, la paroi latérale périphérique (3) est prolongée vers l'extérieur par une saillie (20), un tunnel de passage (21) pour un cordon de soudure étant prévu dans la zone d'un joint de soudure (19).

6. Dispositif selon la revendication 5, **caractérisé en ce que** le tunnel de passage (21) a une largeur qui est suffisamment large pour qu'un cordon de soudure habituellement généré par laser puisse y passer.

7. Dispositif selon la revendication 5 ou 6, **caractérisé en ce qu'**un alésage (12) s'étend au-dessus du tunnel de passage (21), l'alésage (12) s'étendant au-dessus du tunnel de passage (21) parallèlement au tunnel de passage (21) vers l'extérieur, de sorte que le tunnel de passage (21) peut être refroidi par le fluide s'écoulant à travers l'alésage.

8. Dispositif selon l'une des revendications 5 à 7, **caractérisé en ce qu'**à l'intérieur du tunnel de passage (21) sont prévus un ou plusieurs paquets de brosses, en particulier des paquets de brosses métalliques, qui prolongent la paroi latérale périphérique (3), se terminent de préférence avec le bord périphérique (5), de sorte que ceux-ci reposent sur un cordon de soudure et sont déviés par celui-ci et sont guidés le long du cordon de soudure lors d'un mouvement du couvercle de soudage (2).

9. Dispositif selon l'une des revendications 5 à 8, **caractérisé en ce qu'**en plus ou à la place de paquets de brosses, il y a des lamelles ou des lèvres d'étanchéité en un matériau résistant à la chaleur, en particulier une feuille métallique ou une tôle métallique mince ou une matière plastique résistant à la chaleur, comme le PTFE, les paquets de brosses et les lamelles ou les lèvres d'étanchéité étant disposés en alternance ou successivement.

10. Dispositif selon l'une des revendications 5 à 9, **caractérisé en ce que**, dans la zone d'une voûte de tunnel (22) du tunnel de passage (21), il est prévu un ou plusieurs alésages transversaux (14) débouchant dans l'alésage (12), avec respectivement une constriction de Venturi (13) interagissant, afin d'aspirer des gaz s'écoulant à travers le tunnel de passage (21) de l'extérieur vers l'espace creux (8) et de refroidir simultanément cette zone de manière intensive.

11. Dispositif selon l'une des revendications précédentes, **caractérisé en ce que**, pour le soudage à proximité immédiate des bords des pièces à souder (6, 7), il existe un dispositif de recouvrement automatisé (25) qui est disposé sur un côté ou sur les deux côtés du couvercle de soudage (2), le dispositif de recouvrement (25) possède un bloc d'extension (26) pouvant être actionné automatiquement et qui, lorsque le couvercle de soudage (2) atteint le bord, est amené par pivotement jusqu'au bord correspondant et y est maintenu pendant que le couvercle de soudage (2) glisse sur ce bloc d'extension (26),
le bloc d'extension (26) étant automatiquement pivoté vers le bas au moyen d'une structure de guidage ou d'une coulisse de guidage au moment où il n'y a plus de pièce à usiner (6, 7) sous lui, deux cames de commande (27) commandant par exemple le mouvement et un élément d'actionnement, par exemple un vérin pneumatique ou hydraulique (28), actionnant le bloc d'extension (26), les cames de commande (27), l'élément d'actionnement (28) et le bloc d'extension (26) étant disposés sur une structure de support (29) qui est à son tour disposée sur le dispositif (1).

12. Dispositif selon l'une des revendications précédentes, **caractérisé en ce que** dans la zone de la paroi latérale périphérique (3), des fentes (30) sont disposées en bas à partir du bord périphérique (5) et s'étendent depuis le bord périphérique (5) dans la paroi périphérique (3), les fentes ou la fente (30) décrivant par exemple un arc semi-circulaire, de sorte que la moitié avant du bord périphérique (5) dans le sens de déplacement est pourvu d'une fente (30), un coussin (31) ou un joint d'étanchéité (31) pouvant être déployé et adhérant, en particulier par gonflage, reposant dans la fente, lequel s'applique contre la paroi latérale des pièces à usiner (6, 7) et y adhère, tandis que le couvercle de soudage (2) est déplacé au-delà du bord avec la paroi latérale périphérique (3) ou le bord périphérique (5).

13. Dispositif selon l'une des revendications 1 à 11, **caractérisé en ce que** le couvercle de soudage est réalisé en forme de caisson ou est disposé à l'intérieur d'un agencement en forme de caisson (32), l'agencement en forme de caisson (32) possédant sur sa face inférieure une ouverture de passage (37) pour le faisceau laser (11), qui est délimitée par le bord périphérique (5), l'agencement en forme de caisson (32) présentant une paroi de fond plane (33), une plaque mobile (34) étant disposée dans la paroi de fond plane (33) en avance dans le sens de déplacement et se terminant par la paroi de fond (33), qui, lorsque l'ouverture (37) délimitée par le bord périphérique (5) arrive dans la zone de le bord, peut être déplacée avec le bord correspondant se terminant au-dessus de l'ouverture (37), de sorte qu'il est garanti qu'aucune fuite de vide ne se produit, une rainure de passage (35) étant prévue sur le côté opposé de l'ouverture, laquelle se trouve dans la paroi de fond (33), de sorte qu'un cordon de soudure correspondant peut y être guidé, un élément en forme de plaque (36) est également guidé dans la rainure de passage (35) et est capable de faire saillie dans l'ouverture (37) délimitée par le bord périphérique (5) afin d'assurer l'étanchéité au vide dans la zone du bord lorsque le procédé de soudage est lancé, la plaque mobile (34) et l'élément en forme de plaque (36) ne sont déplacés que dans la zone du bord et se trouvent sinon à l'extérieur du bord périphérique (5) afin d'être protégés de la chaleur de soudage.

14. Procédé de soudage sous vide au moyen d'un laser, dans lequel un dispositif selon l'une des revendications précédentes est guidé le long d'un joint de soudure (19) entre une première pièce à usiner (6) et une deuxième pièce à usiner (7) et, dans la zone du joint de soudure (19), un faisceau laser (11) fait fondre les pièces à usiner (6, 7) et les relie ainsi l'une à l'autre.

15. Procédé selon la revendication 14, **caractérisé en ce que** les alésages (12)n du dispositif (1) sont traversés par un gaz ou un liquide.

16. Procédé selon la revendication 14 ou 15, **caractérisé en ce que** le liquide amené est reçu à la sortie de fluide (18) et est en particulier évacué.

17. Procédé selon l'une des revendications 14 à 16, **caractérisé en ce que**, pour le soudage de corps creux, en particulier en aluminium, on fait le vide dans le corps creux pendant l'opération de soudage jusqu'à une dépression souhaitée, de sorte que le joint de soudure (19) dans la zone du couvercle de soudage soutient la dépression ou qu'aucun gaz provenant de l'espace intérieur du corps creux n'est attiré dans le couvercle de soudage (2) par la dépression dans celui-ci.

18. Procédé selon l'une des revendications 14 à 16, **caractérisé en ce qu'**une chambre à dépression mobile (38) est entraînée sous le couvercle de soudage (2), de l'autre côté du joint de soudure (19), afin d'empêcher que du gaz ne soit amené dans l'espace creux (8) par le joint de soudage et afin d'assurer une meilleure qualité de la soudure.

19. Procédé selon l'une des revendications 14 à 16, **caractérisé en ce que**, sur un bord commun des pièces à usiner (6, 7) qui doit être dépassé par le dispositif (1) pour le soudage, un élément de bloc (24) est disposé par complémentarité de forme et en se terminant avec le bord, de sorte que le couvercle de soudage (2) repose par complémentarité de forme de tous côtés avec le bord périphérique (5) au-delà du bord, de sorte que le vide peut être maintenu.

20. Procédé selon la revendication 19, **caractérisé en ce que** l'élément de bloc (24) est disposé sur le bord avec des éléments de serrage correspondants et/ou des guides en queue d'aronde sont par exemple fraisés ou disposés d'une autre manière sur le côté du joint de soudure (19) et l'élément de bloc (24) est formé avec des queues d'aronde correspondantes, de sorte que l'élément de bloc (24) est disposé de manière fixe, par complémentarité de forme et de manière définitive sur le bord.

21. Procédé selon la revendication 19 ou 20, **caractérisé en ce que**, après que la soudure est terminée, le vide est également supprimé par l'arrêt de l'écoulement et le couvercle de soudage (2) est retiré, puis l'élément de bloc (24) est déplacé, en le retirant des guides en queue d'aronde et en l'insérant dans des guides en queue d'aronde correspondants de l'autre côté du bord, puis en commençant le processus de soudage en remettant en place le couvercle de soudage (2) de manière correspondante, en tirant le vide et, le cas échéant, en commençant également le mouvement du couvercle de soudage (2) à une faible distance du bord, et donc le laser avec le soudage.

22. Procédé selon l'une quelconque des revendications 19 à 21, **caractérisé en ce que** les espacements des guides en queue d'aronde sont disposés de manière égale, de sorte que l'élément de bloc (24) possède de préférence sur un côté des queues d'aronde correspondant à l'un des espacements des guides en queue d'aronde sur un côté du bord, l'autre côté du bord possédant des queues d'aronde à un espacement différent, de sorte que les guides en queue d'aronde des bords ne sont pas situés à la même hauteur.

23. Procédé selon l'une des revendications 19 à 21, **caractérisé en ce que** les guides en queue d'aronde présentent un même écartement, mais sont décalés d'une certaine valeur sur les côtés respectifs du bord, l'élément de bloc (24) étant alors choisi suffisamment grand pour que, même avec un tel décalage, le couvercle de soudage (2) soit recouvert de manière fiable par le dessous par l'élément de bloc (24).

24. Procédé selon l'une des revendications 19 à 23, **caractérisé en ce que** les guidages en queue d'aronde dans les pièces à usiner (6, 7) sont fermés par des pièces d'ajustage une fois le soudage terminé.
